# EUROPEAN PATENT SPECIFICATION

(11) **EP 4 305 325 B1**
(45) Date of publication and mention of the grant of the patent: **01.05.2024**
(21) Application number: 23712367.4
(22) Date of filing: 08.03.2023
(51) Int. Cl.: F16D 69/02, C04B 35/83

(54) **A METHOD FOR OBTAINING CARBON-CARBON MATERIAL FOR HEAVILY LOADED FRICTION UNITS**
VERFAHREN ZUR HERSTELLUNG VON KOHLENSTOFF-KOHLENSTOFF-MATERIAL FÜR HOCHBELASTETE REIBUNGSEINHEITEN
PROCÉDÉ D'OBTENTION DE MATÉRIAU CARBONE-CARBONE POUR DES UNITÉS DE FROTTEMENT LOURDEMENT CHARGÉES

(30) Priority: 30.05.2022 LV 220046
(43) Date of publication of application: 17.01.2024
(73) Proprietor: 3CM, SIA, 1079 Riga (LV)
(72) Inventor: KRAMARENKO, Alexandr, Limassol 3119 (CY); NIKOLAS, Alexey, 1010 Riga (LV)
(74) Representative: Fortuna, Jevgenijs
(86) International application number: PCT/LV2023/050008
(87) International publication number: WO 2023/234764

(56) References cited:
- US-A1- 2009 110 877
- US-B1- 6 237 203

## Description

### Technical field

The invention relates to the field of mechanical engineering, namely to heavily loaded friction units, such as brake systems of sports cars and other ground equipment.

### Background Art

There is known method of obtaining 2D composites by laying layers of fabrics, felt or other reinforcing elements, followed by impregnation of their binder (US5205888A). The main disadvantage of this method for producing carbon-carbon composites (CCC) is the low interlayer strength of the resulting material, leading to delamination and reduced reliability of the resulting products under operating conditions.

There is also known a method for producing a friction disc, which involves laying out layers of fabric with their subsequent needling to obtain a connected frame, which is subsequently compacted to achieve the required density (US6691393B2). The disadvantage of this method is the increased cost due to the need to use a complex and expensive needling technology, which also does not ensure the uniformity of the properties of the resulting material due to the localization of transversely oriented fibers.

A known method for the manufacture of carbon fiber (WO2019000957A1), which involves pre-perforation of the workpiece to improve the process of product quality, however, it does not provide the production of CCC and their use in friction units.

A known method of manufacturing friction materials for friction units based on chopped fibers and pitch binder (EP1724245A1), involving the production of discretely reinforced friction material. The main disadvantages of this method are the use of dry mixing of components, which can lead to uncontrolled grinding of carbon fibers and the formation of inhomogeneities in the structure of the material, as well as the use of a long and expensive pyrolytic compaction operation, which also leads to low values of the final density (1.75-1. 78 g/cm³) due to the peculiarities of gas-phase sealing. US 2009 110877 A1 discloses a ring-shaped C/C composite material part made by forming a fiber preform, forming holes extending within the preform from at least one face thereof, and densifying the preform with a matrix formed at least in part by a chemical vapor infiltration (CVI) type process. The holes are formed by removing material from the preform with fibers being ruptured.

### Disclosure of the Invention

The technical result of the invention is to increase the interlayer strength of the carbon-carbon friction material while maintaining its fine structure without the use of expensive reinforcing materials and labor-intensive needle-punching and needle-sewing operations due to the preliminary perforation of the carbon fabric layers and ensuring the introduction of discrete carbon fibers into the material structure at the molding stage.

The technical result is achieved by:
- initially, a carbon fabric based on polyacrylonitrile (PAN) fibers of any weave (plain, twill, satin or other weave, preferably with a warp to weft ratio of 1:1 to 3:1) preimpregnated with a binder, preferably based on pitches, or in the initial state, it is subjected to a given perforation by forming holes on it (preferably essentially round in shape) with a linear size significantly exceeding the diameter of the carbon fiber filament, while the ratio of the linear size of the hole to the diameter of the filament L/d>100;
- then, in a perforated sleeve, a press pack is assembled by alternating laying of fabric cuts and sucking through them an aqueous suspension containing a powder of a pitch binder and carbon fiber filaments with a length of not more than 750 mkm; moreover, during the laying of the layers, the holes of the perforations of the layers of carbon fabric are placed either in such a way as to avoid their overlap or partial overlap, or coaxially with each other; moreover, the preferred ratio of water, pitch binder powder and carbon fiber filaments is from 100:5:1 to 100:15:3, and the ratio of carbon fabric and carbon fiber filaments is from 1:2 to 2:1;
- the resulting wet press pack is compressed in the sleeve by at least ¼ of the original height and dried in a fixed state at the melting temperatures of the pitch binder to a constant weight, after which it is cooled to room temperature;
- the resulting press pack is removed from the sleeve and loaded into a mold, after which it is pressed at a temperature not less than twice the melting temperature of the pitch binder to the required thickness, taking into account the provision of the optimal degree of reinforcement of the composite, after which the workpieces are carbonized, compacted, heat treated and mechanically processed in accordance with the drawing.

As a result of perforation followed by suction under optimal conditions at the stage of molding the press pack, carbon fiber filaments are partially infiltrated into the layers of the fabric, which provides an increase in the shear strength of the composite material without the needle-punching operation and eliminates its delamination during operation. Practice has shown that the effect of perforation is more pronounced if it is carried out along concentric circles or radii of a circular workpiece with a step between holes from 10 to 100 mm. After suction of an aqueous suspension containing carbon fiber filaments, the effect of the integration of layers is enhanced in the process of pressing the press pack and is fixed as a result of cooling it in a fixed state to room temperature after drying at the melting temperature of the pitch binder. At the pressing stage, there is an additional compression of the press pack and the final formation of the structure of the composite material with the integration of carbon fiber filaments into the fabric layers.

Performance characteristics are formed at the stages of impregnation, compaction, intermediate and final heat treatments according to specially developed modes. At the same time, the interlayer strength of the resulting composite is not inferior to the known variants of similar materials and reaches 25-30 MPa. The proposed method provides the possibility of a given control of the friction coefficient in the range of 0.3-0.5, while the wear resistance is not inferior to similar materials. The duration of the technological cycle is 30-40% less than known analogues, which ensures a lower cost of production.

### Brief Description of Drawings

Fig. 1. - examples of perforating circular cuts of fabric;
Fig. 2 - scheme for forming a workpiece from perforated fabric cuts;
Fig. 3 - the proposed reinforcement scheme of the press pack.

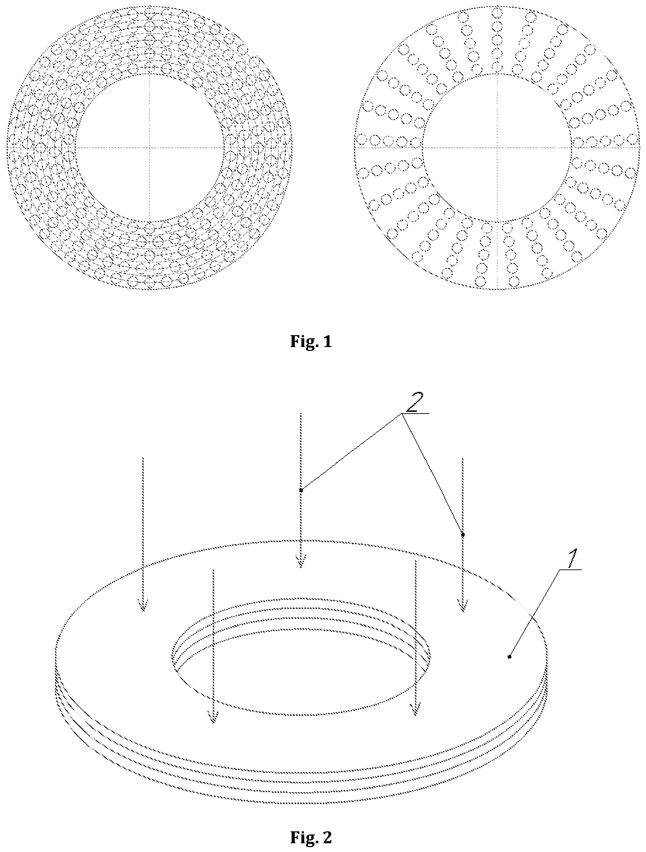

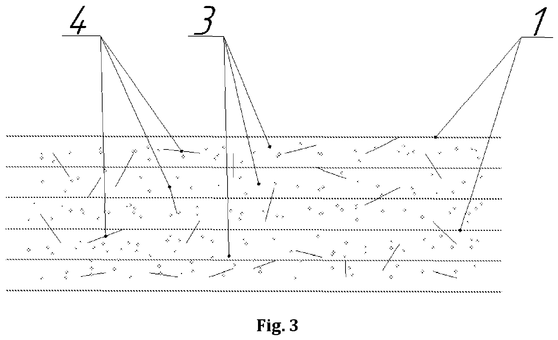

Fig. 1 shows possible schemes for perforation of a circular cutting of fabric with a circular and a radial arrangement of perforations. Fig.2 shows the scheme of molding the workpiece, during which the perforated cuttings of the fabric (1) are laid out (perforation is conventionally not shown) followed by the suction of an aqueous suspension [2] containing the pitch binder powder and carbon fiber filaments through them. Fig. 3 shows the resulting reinforcement scheme of the press pack, which shows the relative positioning of the layers of carbon fabric (1), pitch binder powder (3) and carbon fiber filaments [4].

A more detailed description is illustrated by the following examples:

### Examples of the Implementation of the Invention

Example 1. Initially, circular cuts of twill weave carbon fabric are made, after which they are impregnated with coal-tar pitch with a softening temperature of ~85°C, after which circular perforation of the fabric layers is carried out with round holes 10 mm in diameter, located at a distance of 10-30 mm. Then, the molding of the press pack is carried out by laying out circular cuts of the fabric and sucking through them an aqueous suspension containing a powder of pitch binder with a fraction of <1 mm and carbon fiber filaments with a processing temperature of 1400 ° C with a length of not more than 750 mkm in the ratio of water : powder of pitch binder: carbon filaments fibers -100:5:1. After molding, the press package is compressed by ¼ of the original height and fixed in a metal mandrel, then dried to constant weight at a temperature of ~85°C. After drying, the press pack is reloaded into a mold and the circular worpiece is pressed at a temperature of ~200-220°C, after which it is carbonized at a maximum temperature of 900°C, liquid-phase compaction with a pitch binder at a vacuum of -0.9 atm, followed by carbonization at 650°C under pressure of 32 MPa, heat treatment at a temperature of 2000°C and mechanical treatment.

Example 2. It repeats Example 1, but the cuttings of the fabric are not preimpregnated with a pitch binder.

Example 3. Repeats Example 1, but perforation of fabric cuts is carried out with holes with a diameter of 2 mm.

Example 4. Repeats Example 1, but perforation of fabric cuts is carried out with holes with a diameter of 40 mm.

Example 5. Repeats Example 1, but perforation of fabric cuts is carried out with holes with a diameter of 10 mm, located at a distance of 120-150 mm from each other.

Example 6. Repeats Example 1, but the aqueous suspension contains carbon fiber filaments 2-4 mm long.

Example 7. Repeats Example 1, but the aqueous suspension contains the pitch binder powder and carbon fiber filaments in the ratio water:pitch binder powder: carbon fiber filaments - 100:2:0.4.

Example 8. Repeats Example 1, but the aqueous suspension contains the pitch binder powder and carbon fiber filaments in the ratio water:pitch binder powder: carbon fiber filaments -100:20:4.

Example 9. Repeats Example 1, but after molding, the press pack is not subjected to preloading before fixing.

Example 10. Repeats Example 1, but after fixing the press pack is dried to constant weight at a temperature of ~50°C.

Example 11. Repeats Example 1, but after fixing the press pack is dried to constant weight at a temperature of ~160°C.

Example 12. Repeats Example 1, but the weight ratio of carbon fabric to carbon fiber filaments is 1:3.

Example 13. Repeats Example 1, but the weight ratio of carbon fabric to carbon fiber filaments is 3:1.

**Table. Comparative characteristics of materials obtained in accordance with the examples**

| The material obtained by the method | Density, g/cm³ | Bending strength, MPa | Compressive strength, MPa | Tensile strength at interlayer shear, MPa | Linear wear, mkm/bra king | Friction coefficient | Comment |
|---|---|---|---|---|---|---|---|
| Known (prior art) | 1,75-1,78 | - | - | - | - | - | No information on strength and friction characteristics |
| Suggested method Example 1 | 1,80-1,83 | 90-110 | 180-200 | 28-31 | 1,0-1,2 | 0,35-0,40 | |
| Example 2 | 1,79-1,81 | 30-120 | 110-190 | 26-33 | 0,8-1,2 | 0,40-0,47 | |
| Example 3 | 1,79-1,84 | 80-100 | 160-180 | 15-21 | 1,2-3,5 | 0,43-0,52 | |
| Example 4 | 1,80-1,83 | 55-90 | 80-195 | 22-29 | 1,1-2,0 | 0,31-0,42 | |
| Example 5 | 1,78-1,80 | 100-120 | 180-200 | 11-17 | 0,5-2,4 | 0,33-0,41 | |
| Example 6 | 1,80-1,84 | 85-110 | 170-180 | 24-29 | 1,5-3,1 | 0,42-0,49 | |
| Example 7 | 1,78-1,82 | 85-105 | 120-135 | 11-19 | 2,4-5,0 | 0,45-0,52 | |
| Example 8 | 1,74-1,85 | 50-75 | 145-165 | 13-16 | 2,0-4,4 | 0,28-0,43 | |
| Example 9 | - | - | - | - | - | - | The workpiece delaminated after drying |
| Example 10 | - | - | - | - | - | - | The workpiece delaminated after drying |
| Example 11 | 1,69-1,83 | 35-85 | 120-155 | 12-28 | 0,9-2,9 | 0,35-0,43 | |
| Example 12 | 1,72-1,82 | 20-75 | 105-160 | 7-22 | 1,7-4,2 | 0,31-0,34 | |
| Example 13 | - | - | - | - | - | - | The workpiece delaminated after drying |

As can be seen from the table, the material according to the proposed method has identical performance characteristics as the known material according to the technical solution described in EP1724245A1, including the required interlayer strength of ~30 MPa due to the effective suction of an aqueous suspension through the fabric layers. In the case of using fabric cuts not impregnated with a pitch binder (Example 2), there is a significantly greater variation in physical and mechanical characteristics, in particular, the bending strength takes values from 30 to 120 MPa, which is associated with technological difficulties in forming the workpiece - unimpregnated fabric has significantly lower rigidity and is capable of deforming when an aqueous suspension is sucked in, forming so-called folds, which leads to a significant heterogeneity of properties over the volume. When changing the nature of the perforation of the cuts (Examples 3-5), there is also a significant deterioration in the stability of the properties obtained, associated with the lower uniformity of the resulting composite. In this case, in Examples 3 and 5, there is a significant decrease in interlayer strength to values of 15-21 and 11-17 MPa, respectively, due to the small size of the perforation holes and a significant distance between them and, as a result, poor mutual penetration of tissue layers. The use in the process of molding a suspension with a longer length of carbon fiber filaments (Example 6) leads to a deterioration in frictional properties and, in particular, to a significant increase in wear to 1.5-3.1 mkm/braking, the resulting material due to a rougher structure. With a decrease in the concentration of the pitch binder powder and carbon fiber filaments in Example 7, a significant increase in the linear wear of the material up to 2.4-5.0 mkm/braking can be noted, associated with a low content of discrete carbon fibers on the friction surface and the associated decrease in strength during interlayer shift up to 11-19 MPa. With an increase in the concentration of the powder of the pitch binder and carbon fiber filaments in an aqueous suspension (Example 8), a decrease in physical and mechanical characteristics is observed, in particular, the bending strength to 50-75 MPa, along with a significant decrease in the interlayer strength to 13-16 MPa due to the formation a thicker intermediate layer containing carbon fiber filaments, which is not capable of providing a strong bond between the fabric layers. Also, in the absence of compression during overload, there was no sufficient binding of the press pack during drying, which led to its delamination (Example 9). In Example 10, due to the drying of the press pack at a low temperature, the press pack delaminated due to insufficient temperature for melting the pitch binder and forming a bounded press pack, and in Example 11 the temperature was too high, which led to a strong decrease in the viscosity of the binder and its partial leakage from press pack, which subsequently led to density instability over the volume of the workpiece (values were obtained in the range of 1.69-1.83 g/cm³) and to a significant decrease in strength and friction characteristics, for example, the bending strength was 35-85 MPa, and wear fluctuated within 0.9-2.9 mkm/braking. In Example 12, where the weight ratio of carbon fabric to carbon fiber filaments was 1:3, there is a significant decrease in strength, for example, the bending strength was 20-75 MPa, and the interlaminar shear strength was 7-22 MPa, as well as fluctuations in density by volume due to uneven deposition of carbon fiber filaments in the volume of the workpiece and, as a result, the heterogeneity of the obtained properties. In Example 13, where the weight ratio of carbon fabric to carbon fiber filaments was 3:1, delamination of the workpiece occurred due to the extremely low interlaminar strength resulting from a significant reduction in the volume fraction of discrete carbon fibers in the volume of the workpiece.

## Claims

1. A method for producing carbon-carbon material in the form of circular workpieces for use in heavily loaded friction units, based on carbon fabrics, pitch binders and carbon fiber filaments, including cutting the fabric based on fibers, impregnating it with a binder, forming the workpiece, drying the workpieces, pressing, carbonization, compaction, high-temperature processing and mechanical processing, **characterized in that** before assembling into press packs, the cut fabric impregnated with pitch binder is subjected to a predetermined perforation with holes with a ratio of the linear size of the hole L to the diameter of the filament d, and L / d> 100, after that, the molding of the press pack is carried out by layer-by-layer alternation of layers of fabric with layers of discrete filaments of carbon fibers with a length of not more than 750 mkm in a mixture with pitch binder powder by sucking an aqueous suspension through each layer of fabric, then the pack is compressed and dried in a fixed state to constant weight at the melting temperature of the pitch binder.

2. The method according to claim 1, **characterized in that** the perforation holes of the carbon fabric layers are located along concentric circles or radii with a step between the holes from 10 to 100 mm with a hole diameter of 4 to 30 mm.

3. The method according to claim 1, **characterized in that** the aqueous suspension used to suck through the layers of carbon fabric contains water, pitch binder powder and carbon fiber filaments in a ratio of 100:5:1 to 100:15:3, respectively.

4. The method according to claim 1, **characterized in that** the compression of the wet press pack is carried out by at least 1/4 of its original thickness.

5. The method according to claim 1, **characterized in that** in the process of molding the press pack, the perforation holes of the carbon fabric layers are positioned coaxially with each other.

6. The method according to claim 1, **characterized in that** in the process of molding the press pack, the perforation holes of the carbon fabric layers are arranged in such a way as to avoid their overlap or partial overlap.

7. The method according to claim 1, **characterized in that** the weight ratio of carbon fabric and carbon fiber filaments is from 1:2 to 2:1.

8. The method according to claim 1, **characterized in that** carbon fiber filaments are obtained by grinding carbonized fibers and fabrics in disk and/or ball mills.

9. The method according to claim 1, **characterized in that** carbon fabrics of plain, twill and/or satin weave are used with a ratio of warp and weft threads from 1:1 to 3:1.

## Patentansprüche

1. Verfahren zur Herstellung von Kohlenstoff-Kohlenstoffmaterial in Form von kreisförmigen Werkstücken für den Einsatz in hochbelasteten Friktionsgeräten auf der Grundlage von Kohlenstoffgeweben, Pechbindern und Kohlenstofffaserfilamenten, umfassend das Schneiden des Gewebes auf Faserbasis, das Imprägnieren mit einem Bindemittel, das Formen des Werkstücks, das Trocknen der Werkstücke, das Pressen, das Karbonisieren, das Verdichten, die Hochtemperaturbearbeitung und die mechanische Bearbeitung, **dadurch gekennzeichnet, dass** vor dem Zusammenfügen zu Presspaketen, das geschnittene, mit Pechbinder imprägnierte Gewebe einer vorbestimmten Lochung mit einem Verhältnis der linearen Größe des Lochs L zum Durchmesser des Filaments d unterzogen wird, und L / d > 100, danach die Formung des Presspakets durch schichtweisen Wechsel von Gewebelagen mit Lagen diskreter Filamente aus Kohlenstofffasern mit einer Länge von nicht mehr als 750 m / km in einem Gemisch mit Pechbindemittelpulver erfolgt, indem eine wässrige Suspension durch jede Gewebelage gesaugt wird. Dann wird das Paket komprimiert und in einem festen Zustand auf ein konstantes Gewicht bei der Schmelztemperatur des Pechbindemittels getrocknet.

2. Verfahren nach Patentanspruch 1, **dadurch gekennzeichnet, dass** die Perforationslöcher der Kohlenstoffgewebelagen entlang konzentrischer Kreise oder Radien mit einem Abstand zwischen den Löchern von 10 bis 100 mm und einem Lochdurchmesser von 4 bis 30 mm angeordnet sind.

3. Verfahren nach Patentanspruch 1, **dadurch gekennzeichnet, dass** die wässrige Suspension, die zum Durchsaugen der Kohlenstoffgewebelagen verwendet wird, Wasser, Pechbindemittelpulver und Kohlenstofffaserfilamente in einem Verhältnis von 100:5:1 bzw. 100:15:3 enthält.

4. Verfahren nach Patentanspruch 1, **dadurch gekennzeichnet, dass** die Komprimierung des Nasspresspakets um mindestens 1/4 seiner ursprünglichen Dicke erfolgt.

5. Verfahren nach Patentanspruch 1, **dadurch gekennzeichnet, dass** beim Formen des Presspakets die Perforationslöcher der Kohlenstoffgewebelagen koaxial zueinander angeordnet werden.

6. Verfahren nach Patentanspruch 1, **dadurch gekennzeichnet, dass** beim Formen des Presspakets die Perforationslöcher der Kohlenstoffgewebelagen so angeordnet werden, dass ihre Überlappung oder Teilüberlappung vermieden wird.

7. Verfahren nach Patentanspruch 1, **dadurch gekennzeichnet, dass** das Gewichtsverhältnis von Kohlenstoffgewebe und Kohlenstofffaserfilamenten 1:2 bis 2:1 beträgt.

8. Verfahren nach Patentanspruch 1, **dadurch gekennzeichnet, dass** Kohlenstofffaserfilamente durch Mahlen von karbonisierten Fasern und Geweben in Scheiben- und/oder Kugelmühlen gewonnen werden.

9. Verfahren nach Patentanspruch 1, **dadurch gekennzeichnet, dass** das Kohlenstoffgewebe in Leinwand-, Köper- und/oder Satinbindung mit einem Verhältnis der Kett- und Schussfäden von 1:1 bis 3:1 verwendet wird.

## Revendications

1. Procédé permettant de produire un matériau en carbone-carbone sous la forme de pièces de travail circulaires pour utilisation dans des unités de frottement lourdement chargées, à base de tissus de carbone, de liants de brai et de filaments en fibres de carbone, comportant la découpe du tissu à base de fibres, son imprégnation avec un liant, la formation de la pièce de travail, le séchage des pièces de travail, le pressage, la carbonisation, le compactage, le traitement à température élevée et le traitement mécanique, **caractérisé en ce qu'**avant assemblage en blocs de presse, le tissu coupé imprégné de liant de brai est soumis à une perforation prédéterminée avec des trous avec un rapport de la taille linéaire du trou L au diamètre du filament d, et L / d > 100, après quoi, le moulage du bloc de presse est effectué par alternance couche par couche de couches de tissu avec des couches de filaments distincts de fibres de carbone avec une longueur n'excédant pas 750 mkm dans un mélange avec de la poudre de liant de brai par aspiration d'une suspension aqueuse à travers chaque couche de tissu, puis le bloc est comprimé et séché dans un état fixe jusqu'à poids constant à la température de fusion du liant de brai.

2. Procédé selon la revendication 1, **caractérisé en ce que** les trous de perforation des couches de tissu de carbone sont localisés le long de cercles ou rayons concentriques avec un pas entre les trous allant de 10 à 100 mm avec un diamètre de trou de 4 à 30 mm.

3. Procédé selon la revendication 1, **caractérisé en ce que** la suspension aqueuse utilisée pour aspirer à travers les couches de tissu de carbone contient de l'eau, de la poudre de liant de brai et des filaments en fibres de carbone dans un rapport de 100:5:1 à 100:15:3, respectivement.

4. Procédé selon la revendication 1, **caractérisé en ce que** la compression du bloc de presse humide est effectuée sur au moins 1/4 de son épaisseur originale.

5. Procédé selon la revendication 1, **caractérisé en ce que** dans le processus de moulage du bloc de presse, les trous de perforation des couches de tissu de carbone sont positionnés coaxialement les uns par rapport aux autres.

6. Procédé selon la revendication 1, **caractérisé en ce que** dans le processus de moulage du bloc de presse, les trous de perforation des couches de tissu de carbone sont agencés d'une manière telle à éviter leur chevauchement ou chevauchement partiel.

7. Procédé selon la revendication 1, **caractérisé en ce que** le rapport pondéral du tissu de carbone et des filaments en fibres de carbone va de 1:2 à 2:1.

8. Procédé selon la revendication 1, **caractérisé en ce que** des filaments en fibres de carbone sont obtenus par concassage de fibres et tissus carbonisés dans des broyeurs à disques et/ou à boulets.

9. Procédé selon la revendication 1, **caractérisé en ce que** des tissus de carbone à armure toile, sergé et/ou satin sont utilisés avec un rapport de fils de chaîne et de trame allant de 1:1 à 3:1.
